(19) **Europäisches Patentamt European Patent Office Office européen des brevets**

(11) **EP 4 182 675 B1**

(12) **FASCICULE DE BREVET EUROPEEN**

(45) Date de publication et mention de la délivrance du brevet:
**17.09.2025 Bulletin 2025/38**

(21) Numéro de dépôt: **21742439.9**

(22) Date de dépôt: **16.07.2021**

(51) Classification Internationale des Brevets (IPC):
***G01N 21/359*** *(2014.01)* ***G01N 21/21*** *(2006.01)*

(52) Classification Coopérative des Brevets (CPC):
**G01N 21/21;** G01N 21/359

(86) Numéro de dépôt international:
**PCT/EP2021/070053**

(87) Numéro de publication internationale:
**WO 2022/013448 (20.01.2022 Gazette 2022/03)**

(54) **DISPOSITIF DE CARACTÉRISATION POLARIMÉTRIQUE DE L'ANISOTROPIE D'UN MILIEU, ET SYSTÈME D'IMAGERIE CORRESPONDANT**

VORRICHTUNG ZUR POLARIMETRISCHEN CHARAKTERISIERUNG DER ANISOTROPIE EINES MEDIUMS UND ENTSPRECHENDES ABBILDUNGSSYSTEM

DEVICE FOR POLARIMETRIC CHARACTERISATION OF THE ANISOTROPY OF A MEDIUM AND CORRESPONDING IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2020 FR 2007550**

(43) Date de publication de la demande:
**24.05.2023 Bulletin 2023/21**

(73) Titulaire: **Université de Bretagne Occidentale 29238 Brest (FR)**

(72) Inventeurs:
• **LE GRAND, Yann**
  **29200 BREST (FR)**
• **RIVET, Sylvain**
  **29810 PLOUARZEL (FR)**
• **DUBREUIL, Matthieu**
  **29217 PLOUGONVELIN (FR)**
• **THEILLIER, Xavier**
  **29200 BREST (FR)**

(74) Mandataire: **Vidon Brevets & Stratégie 16B, rue de Jouanet BP 90333 35703 Rennes Cedex 7 (FR)**

(56) Documents cités:
• **LE GRATIET A ET AL: "100 kHz Mueller polarimeter for laser scanning polarimetric microscopy", PROCEEDINGS OF SPIE; [PROCEEDINGS OF SPIE ISSN 0277-786X VOLUME 10524], SPIE, US, vol. 9887, 27 April 2016 (2016-04-27), pages 988724 - 988724, XP060069261, ISBN: 978-1-5106-1533-5, DOI: 10.1117/12.2227118**
• **LEMAILLET P ET AL: "Optimization of a snapshot Mueller matrix polarimeter", OPTICS LETTERS, OPTICAL SOCIETY OF AMERICA, US, vol. 33, no. 2, 15 January 2008 (2008-01-15), pages 144 - 146, XP001511132, ISSN: 0146-9592, DOI: 10.1364/OL.33.000144**

## Description

### Domaine technique

L'invention se situe dans le domaine de la polarimétrie.

Plus particulièrement, l'invention porte sur un nouveau concept de dispositif de caractérisation polarimétrique à codage spectral, permettant la caractérisation de l'anisotropie d'un milieu donné.

L'invention s'applique notamment, mais non exclusivement, à l'imagerie microscopique d'échantillons biologiques, à la mesure d'anisotropies naturelles de phase et d'amplitude (telle que la mesure du pouvoir rotatoire, de la biréfringence et/ou du dichroïsme par exemple) ou induites par un champ électrique et/ou magnétique, ou induites par des contraintes mécaniques, ainsi qu'à la mesure de champ électrique et/ou magnétique ou de contraintes mécaniques.

L'invention est particulièrement bien adaptée à la mesure des anisotropies de très faibles amplitudes : typiquement inférieures à $10^{-4}$ degrés pour une anisotropie de phase et $10^{-6}$ pour une anisotropie d'amplitude dans le cas d'une mesure dont la durée est de 10 $\mu$s, et jusqu'à $10^{-6}$ degrés pour une anisotropie de phase et $10^{-8}$ pour une anisotropie d'amplitude dans le cas d'une mesure dont la durée est de 100 ms.

### Art antérieur

Un polarimètre est un dispositif utilisé pour caractériser de manière non destructive l'état de polarisation de la lumière traversant un milieu, ou bien, en fonction de la configuration optique utilisée, l'état de polarisation de la lumière réfléchie, réfractée ou diffractée par ce milieu.

Du point de vue théorique, la lumière est une onde électromagnétique dont le champ électrique oscille dans un plan perpendiculaire à sa direction de propagation. Plusieurs paramètres peuvent caractériser une onde électromagnétique, et en particulier l'intensité, la fréquence, la phase et la polarisation. La polarisation repose sur l'aspect vectoriel de l'onde électromagnétique. Ce paramètre est utilisé depuis des décennies pour mesurer des propriétés d'anisotropie optique de divers milieux, telles que la biréfringence (qui est une anisotropie de phase) ou le dichroïsme (qui est une anisotropie d'amplitude) par exemple. L'imagerie polarimétrique entre autres permet de révéler des contrastes supplémentaires par rapport à l'imagerie dite classique (reposant sur le principe d'absorption de la lumière), offrant de nouvelles informations sur les propriétés des milieux caractérisés.

Il existe aujourd'hui plusieurs approches polarimétriques pour caractériser les propriétés anisotropiques d'un milieu, basées sur un codage (ou modulation) de la polarisation : le codage temporel (basé sur une séparation séquentielle des états de polarisation), le codage spatial (basé sur une séparation spatiale des états de polarisation), et le codage spectral (basé sur une séparation en longueur d'onde des états de polarisation).

Un dispositif basé sur le codage temporel nécessite généralement l'utilisation d'éléments de codage respectivement de décodage, actifs pour moduler respectivement démoduler la polarisation de la lumière. Un élément optique est dit actif lorsque sa fonction est activée ou commandée par un stimulus mécanique ou électrique extérieur. On peut prendre comme exemples classiques les lames de phase mécaniquement orientables, les cellules de Pockels, les cellules photo-élastiques ou encore les cellules électro-optiques. L'utilisation de tels éléments actifs conduisent généralement à des problèmes de rapidité d'acquisition (l'acquisition des mesures dépendant de la réactivité des éléments actifs). Un dispositif basé sur le codage spatial est un système de mesure très rapide mais encombrant car cela nécessite de paralléliser spatialement le codage et le décodage, en utilisant plusieurs voies d'analyse, donc plusieurs détecteurs.

Un dispositif basé sur le codage spectral est, quant à lui, un système rapide et compact qui utilise des éléments optiques passifs comme des lames de phase immobiles et non contrôlés électriquement. Traditionnellement, un dispositif à codage spectral comporte, dans son bras d'entrée, une source de lumière à multi-longueur d'onde suivie d'un générateur d'états de polarisation et, dans son bras de sortie, un analyseur d'états de polarisation suivi d'un détecteur de lumière. Le milieu à caractériser est disposé entre les bras d'entrée et de sortie. Le générateur d'états de polarisation comprend un premier polariseur et des moyens de codage spectral en polarisation (typiquement des cristaux biréfringents). L'analyseur d'états de polarisation comprend des moyens de décodage spectral en polarisation optiquement accouplés à un deuxième polariseur. Le principe consiste à coder spectralement la lumière incidente en polarisation pour la faire interagir avec le milieu et à décoder spectralement en polarisation la lumière issue du milieu, après interaction avec celui-ci, de façon à détecter l'état de polarisation modifié par le milieu. Les caractéristiques anisotropiques du milieu peuvent ensuite être déterminées en fonction du signal lumineux reçu par le détecteur de lumière. Ainsi, en parallélisant spectralement le codage et le décodage et en utilisant seulement des éléments optiques passifs, la mesure polarimétrique d'un dispositif à codage spectral est très rapide à l'inverse d'un codage/décodage temporel. De plus, un tel dispositif est compact car il utilise un seul détecteur et les éléments de codage et de décodage sont des lames de phases de quelques millimètres d'épaisseur.

Ces dispositifs basés sur le codage temporel, spatial ou spectral sont utilisés pour effectuer une mesure ponctuelle et peuvent être intégrés dans un système d'imagerie afin de cartographier les propriétés polarimétriques d'un milieu.

Les dispositifs de caractérisation polarimétrique décrits précédemment sont capables de mesurer la réponse polarimétrique d'un milieu d'étude en discriminant les différentes propriétés polarimétriques. Toutefois, de tels dispositifs ne permettent pas une mesure d'anisotropie aussi sensible que les dispositifs reposant sur une configuration sur « fond noir ». Un dispositif optique est dit sur « fond noir » lorsqu'il est configuré de sorte que l'intensité de lumière détectée par le détecteur de lumière tend vers une valeur nulle lorsque l'anisotropie du milieu est nulle (par exemple en disposant un couple de polariseurs croisés). Néanmoins, les configurations sur « fond noir » sont sensibles au carré du phénomène polarimétrique, ce qui limite les performances de ces dispositifs.

Afin d'améliorer la sensibilité des mesures de polarisation, des configurations polarimétriques tendant vers une caractérisation sur fond noir ont été proposées (dite « proche du fond noir »), telles que celles décrites dans le document de brevet US7202950B2 (basé sur un codage temporel) et le document de brevet WO2017099755 (basé sur un codage spectral). De telles configurations reposent sur une détection linéaire de l'intensité lumineuse reçue par le détecteur de lumière. Cette détection linéaire est réalisée en implémentant un biais polarimétrique implémenté dans une configuration sur fond noir (par exemple avec un couple de polariseurs légèrement décroisés ou en ajoutant une anisotropie de même nature que l'anisotropie à mesurer). Quelle soit basée sur un codage spectral ou temporel, cette approche permet d'augmenter la sensibilité des mesures. Néanmoins, dans ce type de configuration, la résolution de mesure dépendant fortement de la stabilité de la source lumineuse au cours des mesures, ce qui n'est pas optimal. Afin de s'affranchir de cette contrainte, une solution connue et développée pour la mesure de l'anisotropie circulaire de phase consiste à réaliser un codage additionnel de la polarisation, par exemple en modulant temporellement le biais polarimétrique au moyen d'un ou plusieurs composants optiques actifs. Toutefois, de tels composants sont limités en termes de vitesse de codage (typiquement à 100 Hz), et présentent une taille non-négligeable ce qui peut poser des problèmes en termes d'encombrement, notamment lorsque le dispositif est destiné à être intégré dans un système d'imagerie. De tels limites ne permettent donc pas de caractériser l'anisotropie d'un milieu de manière ultra-sensible et avec une grande vitesse d'exécution.

LE GRATIET A ET AL, PROCEEDINGS OF SPIE, vol. 9887, 988724 (2016) divulgue un dispositif de caractérisation polarimétrique de l'anisotropie d'un milieu et l'évaluation de ses performances.

Il existe donc un réel besoin de fournir une technique de caractérisation polarimétrique à sensibilité augmentée, particulièrement bien adaptée aux milieux d'anisotropie de faibles amplitudes, et qui soit efficace en termes de vitesse d'exécution.

**Résumé de l'invention**

Dans un mode de réalisation particulier de l'invention, il est proposé un dispositif de caractérisation polarimétrique de l'anisotropique d'un milieu, comprenant :

- une source de lumière émettant une lumière multi-longueur d'onde,
- des moyens de codage spectral en polarisation disposés entre la source de lumière et le milieu, configurés pour coder spectralement en polarisation la lumière émise, lesdits moyens de codage comprenant un premier polariseur définissant un premier axe de polarisation, dit axe de référence,
- un détecteur de lumière définissant un seuil de saturation d'intensité prédéterminé,
- des moyens de décodage spectral en polarisation disposés entre le milieu et le détecteur de lumière et configurés pour décoder spectralement en polarisation une lumière restituée par le milieu, lesdits moyens de décodage comprenant un deuxième polariseur définissant un deuxième axe de polarisation orienté perpendiculairement à l'axe de référence,

les moyens de codage d'un tel dispositif comprenant un modulateur spectral disposé en sortie du premier polariseur, ledit modulateur comprenant une première lame à retard de phase chromatique caractérisée par un premier axe neutre, ladite première lame à retard de phase étant conformée de sorte que le premier axe neutre définisse, avec l'axe de référence, un angle d'inclinaison dont la valeur est fonction du seuil de saturation du détecteur de lumière pour obtenir une sensibilité augmentée dudit dispositif.

Ainsi, la présente invention propose une approche consistant à utiliser des moyens passifs de codage et de décodage en polarisation pour permettre une caractérisation, à sensibilité augmentée, de l'anisotropie du milieu. En introduisant un retard de phase de manière totalement passive et qui est fonction du seuil de saturation du détecteur de lumière, il est ainsi possible de réaliser une détection linaire de l'anisotropie du milieu par une mesure de l'intensité lumineuse reçue sur le détecteur de lumière, ce qui permet une caractérisation plus sensible et plus rapide du milieu à caractériser.

Selon un aspect particulier de l'invention, le modulateur spectral comprend une deuxième lame à retard de phase chromatique disposée en sortie de ladite première lame à retard de phase, lesdites première et deuxième lame à retard étant conformées de façon à produire respectivement des premier et deuxième retards de phase différents.

La présence d'un jeu de deux lames à retard de phase permet de réaliser un codage spectral sur la base de deux porteuses de fréquences de modulation distinctes, l'une allouée à la mesure d'anisotropie du milieu M et l'autre allouée à la source lumineuse. Ainsi, l'intensité lumineuse détectée par le détecteur de lumière est porteuse d'informations relatives à l'anisotropie du milieu M et d'informations relatives à la source lumineuse.

Selon un aspect particulier de l'invention, lesdites première et deuxième lames à retard de phase sont constituées d'un même matériau cristallin biréfringent et ont une épaisseur différente.

Cette approche est simple à mettre en œuvre et peu coûteuse.

De manière alternative, lesdites première et deuxième lames à retard de phase sont constituées d'un matériau cristallin de biréfringence différente.

Selon un autre aspect particulier de l'invention, la deuxième lame à retard de phase a un deuxième axe neutre orienté de manière à être confondu avec l'axe de référence.

Selon une caractéristique particulière, la source de lumière présente une largeur de bande spectrale prédéterminée, les première et deuxième lames à retard de phase ont chacune une épaisseur qui dépend de ladite largeur de bande spectrale prédéterminée.

On s'assure ainsi que les différents paramètres de l'anisotropie étudiée du milieu sont alloués à des porteuses différentes, de manière à ce que le dispositif puisse effectuer une mesure indépendante des différents paramètres de cette anisotropie. Selon un autre aspect particulier de l'invention, dans lequel, le milieu présentant une anisotropie de type prédéfini :

- les moyens de codage comprennent un adaptateur de phase passif disposé en sortie de l'amplificateur optique et conformé de façon à induire un troisième retard de phase qui est fonction dudit type d'anisotropie prédéfini ; et
- les moyens décodage comprennent un compensateur de phase passif disposé en entrée du deuxième polarisateur et conformé de façon à appliquer un quatrième retard de phase qui est un retard de phase inverse au troisième retard de phase.

Ainsi, l'invention prévoit la possibilité de mesurer une anisotropie de différentes natures (linéaire, circulaire, elliptique par exemple) en jouant simplement sur le retard de phase du dispositif en amont et en aval du milieu.

Selon une première mise en œuvre particulière de l'invention, le type d'anisotropie est circulaire :

- l'adaptateur de phase est uniquement constitué d'une première lame d'onde achromatique ou est exempt de lame optique ;
- le compensateur de phase est uniquement constituée d'une deuxième lame d'onde achromatique ou est exempt de lame optique.

Ainsi, le dispositif peut être configuré pour effectuer une mesure d'anisotropie de type circulaire.

Selon une deuxième mise en œuvre particulière de l'invention, ledit type d'anisotropie est linéaire :

- l'adaptateur de phase est uniquement constitué d'une première lame quart-d'onde achromatique, ayant un axe neutre orienté d'un angle sensiblement égal à 45 degrés par rapport à l'axe de référence ;
- le compensateur de phase est uniquement constitué d'une deuxième lame quart-d'onde achromatique, ayant un axe neutre orienté d'un angle sensiblement égal à -45 degrés par rapport à l'axe de référence.

Ainsi, le dispositif peut être configuré pour effectuer une mesure d'anisotropie de type linéaire.

Selon une troisième mise en œuvre particulière de l'invention, ledit type d'anisotropie est elliptique :

- l'adaptateur de phase est uniquement constitué de :

  • une troisième lame à retard de phase chromatique ayant un troisième axe neutre orienté d'un angle sensiblement égal à 45 degrés par rapport à l'axe de référence,
  • une première lame quart-d'onde achromatique, ayant un premier axe neutre orienté d'un angle sensiblement égal à 0 degré par rapport à l'axe de référence, et disposée en sortie de ladite troisième lame;

- le compensateur de phase est uniquement constitué de :

  • une deuxième lame quart-d'onde achromatique, ayant un deuxième axe neutre orienté d'un angle sensiblement égal à 90 degrés par rapport à l'axe de référence ; et
  • une quatrième lame à retard de phase chromatique ayant un quatrième axe neutre orienté d'un angle sensiblement égal à -45 degrés par rapport à l'axe de référence, et disposée en sortie de ladite deuxième lame.

  Ainsi, le dispositif peut être configuré pour effectuer une mesure d'anisotropie de type elliptique.

Selon une première implémentation du dispositif, l'adaptateur de phase et le compensateur de phase forment deux blocs distincts disposés de part et d'autre du milieu de façon à former une configuration polarimétrique en transmission.

Selon une deuxième implémentation du dispositif, l'adaptateur de phase et le compensateur de phase forment un élément mono-bloc disposé entre un cube séparateur de faisceau et un élément optiquement réfléchissant, ledit élément réfléchissant étant agencé pour réfléchir la lumière restituée par le milieu vers le détecteur de lumière via le cube séparateur de faisceau, de façon à former une configuration polarimétrique en réflexion, ledit élément mono-bloc jouant le rôle d'adaptateur de phase pour une lumière incidente issue du séparateur de faisceau et le rôle de compensateur pour une lumière incidente correspondant à la lumière réfléchie par l'élément réfléchissant.

Le fait de pouvoir disposer de différentes configurations peut permettre de faciliter l'intégration du dispositif dans un système comprenant d'autres éléments, tel qu'un système d'imagerie par exemple.

Dans un autre mode de réalisation particulier de l'invention, il est proposé un système d'imagerie comprenant :

- un dispositif de caractérisation polarimétrique dans l'un quelconque de ses différents modes de réalisation, ledit dispositif comprenant des moyens d'obtention de données de mesure de caractérisation polarimétrique du milieu ;
- des moyens de génération d'une image polarimétrique du milieu prenant en compte lesdites données de mesure de caractérisation polarimétrique.

## Figures

D'autres caractéristiques et avantages de l'invention apparaîtront plus clairement à la lecture de la description suivante, donnée à titre d'exemple illustratif et non limitatif, et des dessins annexés, parmi lesquels :

- la figure 1 présente une première configuration en transmission d'un dispositif de caractérisation selon un mode de réalisation particulier de l'invention ;
- la figure 2 présente une deuxième configuration en transmission d'un dispositif de caractérisation selon un mode de réalisation particulier de l'invention ;
- la figure 3 présente une troisième configuration en transmission d'un dispositif de caractérisation selon un mode de réalisation particulier de l'invention ;
- la figure 4 présente une première configuration en réflexion d'un dispositif de caractérisation selon un mode de réalisation particulier de l'invention ;
- la figure 5 présente une deuxième configuration en réflexion d'un dispositif de caractérisation selon un mode de réalisation particulier de l'invention ;
- la figure 6 illustre de manière schématique la structure d'un modulateur linéariseur passif selon un mode de réalisation particulier de l'invention.

## Description détaillée de l'invention

Sur les figures du présent document, les éléments identiques sont désignés par une même référence numérique.

Le principe général de l'invention repose sur une utilisation de moyens passifs de codage et de décodage en polarisation pour permettre une caractérisation polarimétrique à sensibilité augmentée. L'invention propose d'appliquer, de manière totalement passive, un retard de phase qui est fonction du seuil de saturation du détecteur de lumière, pour permettre une détection linaire de l'intensité lumineuse par le détecteur de lumière, de sorte que la caractérisation polarimétrique soit plus sensible et plus rapide que dans l'état de l'art.

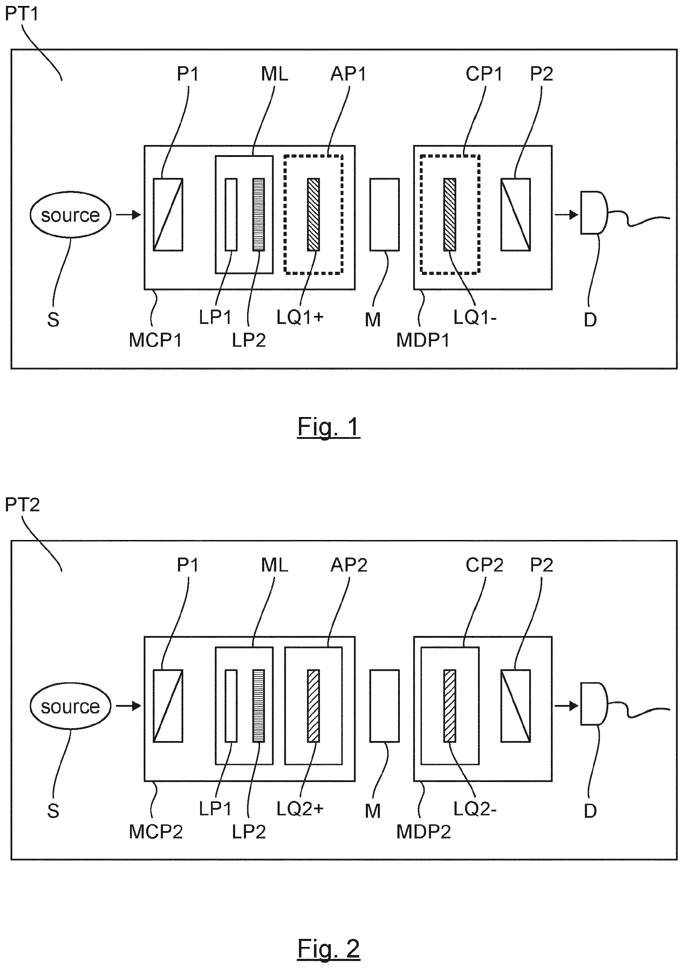

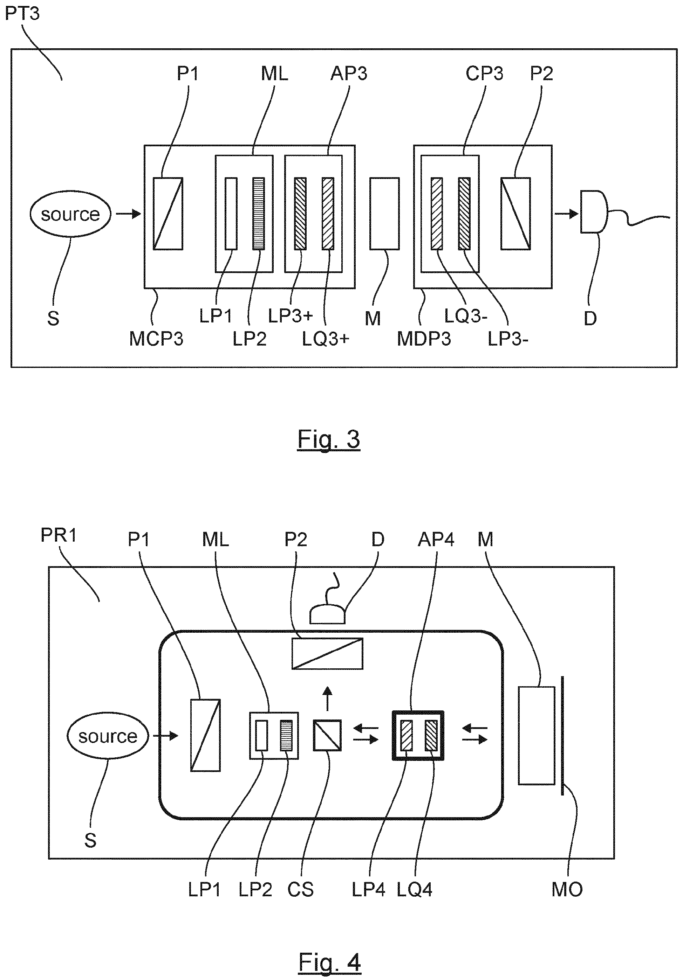

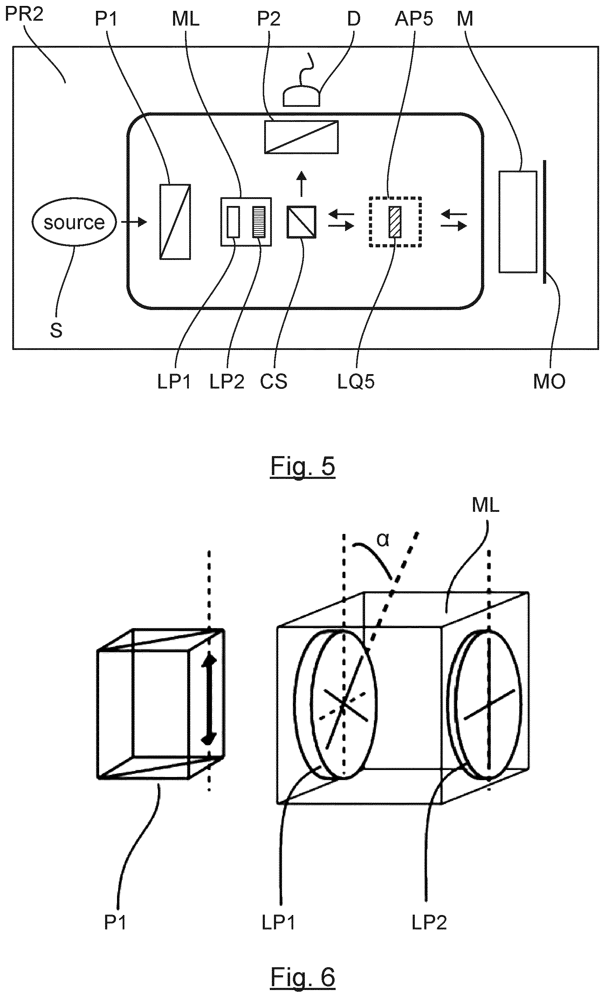

Il est proposé deux configurations particulières du dispositif selon l'invention : une configuration en transmission décrite en relation avec les figures 1 à 3 et une configuration en réflexion décrite en relation avec les figures 4 et 5.

On présente de manière simplifiée, en relation avec la **figure 1,** une première configuration en transmission d'un dispositif de caractérisation polarimétrique PT1 selon l'invention. Cette configuration particulière permet de réaliser une mesure ultra-sensible de l'anisotropie de type circulaire d'un milieu M, qu'elle soit une anisotropie circulaire de phase (par exemple pour mesurer l'angle de rotation du pouvoir rotatoire du milieu) ou une anisotropie circulaire d'amplitude (par exemple pour mesurer la diattenuation circulaire du milieu).

Le milieu M est caractérisé par une transmittance isotrope T qui correspond au rapport entre l'intensité lumineuse de la lumière issue du milieu (après interaction avec celui-ci), notée I, et l'intensité lumineuse directement issue de la source lumineuse S (sans interaction avec le milieu), notée $I_0$. Dans ce cas, l'intensité lumineuse I peut s'écrire mathématiquement de la manière suivante : $I = T \times I_0$.

Le milieu M est par exemple une solution à base de saccharose, caractérisée par un pouvoir rotatoire (anisotropie circulaire de phase) et dont on cherche à mesurer l'angle de rotation $\theta$. Une fois l'angle de rotation $\theta$ mesurée, il est possible de déduire la concentration en sucre contenue dans cette solution.

Selon l'invention, le dispositif polarimétrique comprend :

- dans son bras d'entrée, une source de lumière S disposé en entrée d'un bloc de codage spectral en polarisation, référencé MCP1 ;
- dans son bras de sortie, un bloc de décodage spectral en polarisation, référencé MDP1, disposé en entrée à un détecteur de lumière D ; et
- le milieu M, qui est disposé entre les blocs de codage MCP1 et de décodage MDP1.

Le bloc de codage MCP1 est configuré pour coder spectralement en polarisation la lumière émise par la source S. Aussi, à chaque longueur d'onde émise est attribuée un état de polarisation distinct caractérisant la lumière interagissant avec le milieu M. Quant au bloc de décodage MDP1, il est configuré pour décoder spectralement en polarisation la lumière restituée par milieu M. Le signal lumineux reçu par le détecteur D est un signal modulé en longueur d'onde dont l'amplitude de modulation est associée à l'anisotropie du milieu M ou aux caractéristiques de la source S, suivant la fréquence de modulation considérée.

Comme illustré sur la figure, les éléments précités S, MCP1, M, MDP1 et D sont disposés et centrés sur un même axe du dispositif (non représenté) de façon à former une configuration en transmission : la lumière émise par la source S traverse (via le bloc MCP1) le milieu M et ressort après interaction avec le milieu M en direction du détecteur D (via le bloc MDP1).

La source de lumière S est une source à large bande spectrale émettant une lumière multi-longueur d'onde non polarisée, ayant une amplitude $I_0$. Dans le présent exemple, la source lumineuse est une source laser à balayage en longueur d'onde émettant dans le proche infrarouge, compris typiquement entre 1000 et 1100 nm avec une vitesse de balayage de 100 kHz (pour permettre une mesure de l'anisotropie du milieu M relativement stable sur une durée de 10 μs).

Le détecteur de lumière D est une photodiode à avalanche, sensible au domaine spectral compris entre 600 et 1150 nm. Le détecteur D est configuré pour détecter l'intensité lumineuse qu'il reçoit en sortie du bloc de décodage MDP1 et la convertit en signal électrique à destination d'une unité de traitement (non représentée) qui permet de ré-échantillonner le signal électrique dans des intervalles de temps équivalents à des intervalles de fréquence optique. Cette dernière est raccordée électriquement à la source de lumière S, d'une part, et au détecteur de lumière D d'autre part, à des fins de pilotage de ces deux éléments. Le détecteur D est en outre caractérisé par un seuil de saturation d'intensité lumineuse $S_D$, défini comme étant la quantité de lumière au-delà de laquelle la couche photosensible du détecteur n'est plus capable de détecter une variation d'intensité lumineuse.

_Bras d'entrée du dispositif_

Le bloc de codage MCP1 comprend un polariseur linéaire achromatique P1 définissant un axe de polarisation. Cet axe de polarisation constitue, de manière arbitraire, l'axe de référence du dispositif selon l'invention. Le polariseur P1 convertit la lumière multi-longueur d'onde non polarisée émise par la source S en une lumière polarisée linéairement dont l'orientation est parallèle à celle de l'axe de référence. On entend par « achromatique » le fait que le polariseur convertit la lumière incidente indépendamment des longueurs d'onde caractérisant cette lumière.

Le bloc de codage MCP1 comprend également un modulateur lineariseur ML, disposé en sortie du polariseur P1. Le modulateur lineariseur ML, plus généralement appelé modulateur spectral, est un composant optique passif comprenant un jeu de deux lames à retard de phase successivement disposées et centrées sur l'axe du dispositif. Ces deux lames sont référencées LP1 et LP2 sur la figure 1 (et les autres figures également, compte tenu du fait qu'il s'agit d'un bloc optique commun à l'ensemble des configurations optiques proposées dans le cadre de la présente invention). Ces deux lames sont chromatiques et passives. On entend par « chromatique », pour une lame donnée, le fait que cette lame produit sur la lumière incidente un retard de phase qui dépend de la longueur d'onde considérée. Ainsi, un retard de phase différent est induit par la lame pour chaque longueur d'onde émise par la source S.

Plus précisément, comme illustré sur la **figure 6**, le modulateur lineariseur ML comprend une première lame à retard de phase LP1 définissant un premier axe neutre tel que ce premier axe neutre forme, avec l'axe de référence, un angle d'inclinaison α prédéterminé (qu'on nomme aussi par la suite facteur de linéarisation α). L'angle d'inclinaison α est défini dans le plan perpendiculaire à l'axe principal du dispositif (axe de propagation de la lumière), entre l'axe neutre de la lame à retard de phase LP1 et l'axe de référence. La valeur du facteur de linéarisation α (exprimée en degrés) est comprise dans la plage [0 ; 90], et est fonction du niveau d'intensité de lumière $I_0$ émise par la source S et du seuil de saturation $S_D$ du détecteur de lumière D. Dans la configuration particulière d'une mesure de l'anisotropie circulaire du milieu M, la valeur du facteur de linéarisation α est de 0,46 degrés, afin d'être proche du seuil de saturation de détecteur D. Le modulateur lineariseur ML comprend en outre une deuxième lame à retard de phase LP2 définissant un deuxième axe neutre tel que ce deuxième axe neutre soit parallèle à l'axe de référence.

D'une manière générale, les lames LP1 et LP2 sont conformées chacune de façon à produire sur la lumière incidente un retard de phase différent. Pour ce faire, dans l'exemple particulier présenté ici, les lames à retard de phase LP1 et LP2 sont chacune constituées d'un cristal biréfringent de vanadate d'yttrium (YVO4) et présentent chacune une épaisseur différente de sorte que le retard de phase appliqué par la lame LP1 soit différente de celui appliqué par la lame LP2. La lame LP1 présente une épaisseur e1 égale à 2,0 mm, et la lame LP2 une épaisseur e2 égale à 0,4 mm, les valeurs d'épaisseur choisies pour chacune de ces deux lames étant fonction de la largeur de bande spectrale de la source S et du nombre d'intervalles de temps mis en œuvre par le détecteur D (pour ré-échantillonner le signal électrique). A part en termes d'épaisseurs, les lames LP1 et LP2 sont identiques, seule la lame LP1 est inclinée de l'angle α par rapport à l'axe de référence du dispositif.

De façon alternative, on pourrait envisager que les lames à retard de phase LP1 et LP2 soient fabriquées chacune dans un matériau de biréfringence différente, de sorte que le retard de phase appliqué par la lame LP1 soit différent de celui appliqué par la lame LP2 (étant entendu que l'épaisseur de la lame LP1 pouvant être identique ou différente de l'épaisseur de la lame LP2).

À titre d'exemples, les lames LP1 et LP2 peuvent être chacune constituées d'un matériau cristallin à base de quartz ($SiO_2$), de calcite ($CaCO_3$), de vanadate d'yttrium (YVO4), ou de dioxyde de tellure ($TeO_2$), sans pour autant être exhaustif.

La présence des deux lames à retard de phase permet de réaliser un codage spectral en polarisation sur la base de deux porteuses de fréquences distinctes : une première porteuse de fréquence f0 allouée à la mesure d'anisotropie du milieu M (introduite par la lame LP1) et une deuxième porteuse de fréquence f1 allouée à la source lumineuse (introduite par la lame LP2). On entend par « porteuse », une fonction sinusoïdale définie à une fréquence fixe et évoluant en fonction des longueurs d'onde. Si la source lumineuse employée est une source laser à balayage en longueur d'onde par exemple, alors la porteuse est une fonction sinusoïdale évoluant en fonction du temps. En d'autres termes, la lumière polarisée issue du polariseur P1 est spectralement encodée en polarisation au moyen de deux porteuses distinctes dont l'amplitude de l'une est proportionnelle à l'anisotropie circulaire du milieu M à caractériser.

Le modulateur linéariseur ML convertit ainsi, et sans éléments actifs, la lumière polarisée linéairement issue du polariseur P1 en une lumière spectralement codée en polarisation et adaptée pour réaliser à la fois une modulation de l'intensité lumineuse en longueur d'onde et une linéarisation de la détection de l'anisotropie du milieu M, et ainsi permettre une mesure de cette anisotropie avec une sensibilité augmentée. Ce codage spectral dépend du facteur de linéarisation $\alpha$ qui lui-même dépend du seuil de saturation $S_D$ du détecteur D. Les fréquences de modulation f0 et f1 sont choisies de manière à réduire à limiter le bruit introduit par le détecteur D et associé aux fluctuations d'intensité de la source S.

On rappelle ici que la lumière spectralement codée en polarisation est une lumière véhiculant une pluralité d'états de polarisation, chacun associé à une longueur d'onde donnée de la bande spectrale. Dans le cadre de la présente invention, le codage en polarisation appliqué par le modulateur linéariseur ML est spécifiquement adapté pour maximiser le rapport signal-sur-bruit de la mesure d'intensité lumineuse du phénomène anisotropique au niveau du détecteur D.

La première lame LP1 est donc utilisée pour moduler la lumière incidente par la porteuse de fréquence f0. Le courant photoélectrique résultant délivré par le détecteur D correspond alors à la somme mathématique de deux contributions : un signal continu et une modulation de fréquence f0 qui dépendent linéairement de l'anisotropie du milieu M et de l'intensité lumineuse restituée par le milieu M, notée ci-après intensité $I_M$. La fréquence f0 de la porteuse dépend du déphasage de la lame LP1 (c'est-à-dire de son épaisseur et sa biréfringence). La deuxième lame LP2 est donc utilisée pour moduler la lumière incidente par une deuxième porteuse de fréquence (f1) différente de la première porteuse. Le courant photoélectrique résultant délivré par le détecteur D est la somme de plusieurs contributions à savoir : une modulation à la fréquence f0 dont l'amplitude est égale au produit mathématique $I_M$ x $\alpha^2$ (pour un facteur de linéarisation $\alpha$ inférieur à 10 degrés), une modulation à la deuxième fréquence f1 dont l'amplitude est égale au produit mathématique $I_M$ x $\alpha$ x $\theta$, où $\theta$ est l'angle de rotation du pouvoir rotatoire du milieu M. La fréquence f1 dépend des retards de phase cumulés des lames LP1 et LP2. Par exemple, pour deux lames LP1 et LP2 fabriquées avec le même matériau, respectivement d'épaisseur e1 et e2, alors la fréquence f1 peut s'exprimer mathématiquement de la façon suivante : f1 = (1 + e2/e1) x f0.

A titre d'exemple, pour un balayage en longueur d'onde de la source laser sur 100 nm en 10 $\mu$s et des lames LP1 et LP2 en YVO4 d'épaisseur respective 2,0 mm et 0,4 mm, la fréquence f0 est égale à 1,8 MHz et f1 à 2,16 MHz.

Ainsi, la première modulation est insensible au milieu M par rapport à l'anisotropie du milieu M, alors que la deuxième modulation est proportionnelle à l'anisotropie circulaire de phase associée au milieu M. Partant de cette constatation, les inventeurs ont découvert que la présence de la lame LP1 permet de détecter linéairement l'anisotropie du milieu alors que celle de la lame LP2 permet de différencier l'intensité lumineuse $I_M$ de l'anisotropie par l'ajout d'une porteuse à une fréquence différente. Le rapport entre l'amplitude de la première porteuse (de fréquence f0) et l'amplitude de la deuxième porteuse (de fréquence f1) permet de mesurer l'anisotropie du milieu M indépendamment de l'intensité lumineuse $I_M$. Ceci présente l'avantage de s'affranchir des pertes d'intensité lumineuse liées à l'intensité lumineuse de la source S et de la transmission du milieu M.

Alternativement ou de manière complémentaire, si le niveau d'intensité lumineuse de la source lumineuse $I_0$ est préalablement connu, et que partant du principe que le milieu M n'absorbe ni ne diffuse la lumière ou que la transmittance du milieu M est connue et stable pendant la fenêtre temporelle de la mesure, il est possible de s'affranchir de la lame LP2.

Le bloc de codage MCP1 comprend également un adaptateur de phase AP1 disposé, d'une part, en sortie du modulateur linéaire ML et, d'autre part, à l'entrée du milieu M. D'une manière générale, l'adaptateur de phase a pour fonction d'adapter l'état de polarisation de la lumière issue du modulateur linéaire ML, en induisant un retard de phase qui est fonction du type d'anisotropie à caractériser.

L'anisotropie circulaire de phase étant décrite par un seul paramètre qui est l'angle de rotation $\theta$, l'amplitude de chacune des deux porteuses à f0 et f1 est suffisante pour la mesure du paramètre $\theta$ indépendamment de la transmission du milieu M et de l'intensité lumineuse $I_0$ de la source S. Il n'est ainsi pas nécessaire, dans cette première configuration polarimétrique, que l'adaptateur de phase AP1 soit configuré pour modifier les états de polarisation de l'onde à la sortie de lame LP2. L'adaptateur de phase AP1 est constitué d'une lame d'onde LQ1+ (lame $\lambda$ achromatique passive) qui est neutre du point de vue déphasage, contrairement aux configurations illustrées en relation avec les figures 2 (anisotropie linéaire) et 3 (anisotropie elliptique) et décrites ci-après. Ainsi, c'est la lumière spectralement codée issue directement du modulateur linéariseur ML qui traverse le milieu M. Les états de polarisation de la lumière interagissant avec le milieu M se trouvent ensuite modifiés, et pénètrent ensuite dans le bloc MDP1 pour y être décodés spectralement.

De manière alternative, l'adaptateur de phase AP1 ne comprend aucune lame optique. Cette variante de réalisation est mise en évidence sur la figure par la présence de traits en pointillé pour le bloc AP1. Cette alternative permet d'offrir une configuration à encombrement réduite et moins coûteuse.

Bras de sortie du dispositif

Le bloc MDP1 comprend un compensateur de phase CP1 disposé, d'une part, en sortie du milieu M d'autre part, à l'entrée du polariseur P2. D'une manière générale, le compensateur de phase a pour fonction de compenser le retard de phase induit par l'adaptateur de phase, autrement dit pour renverser la transformation de polarisation induite par l'adaptateur de phase. Il doit donc être configuré pour induire un retard de phase d'ordre inverse à celui induit par l'adaptateur de phase. Dans le présent exemple, le compensateur de phase AP1 est constitué d'une lame d'onde isotrope LQ1- (lame λ achromatique passive) ou, à titre d'alternative, le compensateur de phase est exempt de lame optique.

Le bloc de décodage MDP1 comprend en outre un polariseur linéaire achromatique P2 définissant un axe de polarisation orthogonal à l'axe de référence du dispositif. On parle alors de configuration à polariseurs croisés. Sans le modulateur linéariseur ML, cette configuration particulière permettrait de réaliser une mesure polarimétrique de l'anisotropie circulaire du milieu M sur fond noir, c'est-à-dire une détection quadratique de l'anisotropie. La configuration à polariseurs croisés combinée au modulateur linéariseur ML précité permet d'augmenter significativement la sensibilité des mesures polarimétriques car elle permet une détection linéaire de l'anisotropie d'une part, et l'anisotropie et l'intensité lumineuse de la lumière $I_M$ restituées par le milieu M interviennent dans l'amplitude de deux porteuses d'autre part. L'utilisation de polarisateurs P1 et P2 de construction et de propriétés optiques identiques est à privilégier de manière à assurer une extinction optique la plus élevée possible en l'absence de milieu à étudier et pour un facteur de linéarisation nul.

A noter que les lames LQ1+ et LQ1- sont des lames communément qualifiées de « minces », alors que les lames LP1, LP2 sont des lames communément qualifiées « d'épaisses ». On entend par « lame épaisse » une lame à retard de phase d'ordre multiple dont le déphasage varie avec la longueur d'onde (chromatique), par opposition à lame mince qui est une lame compensée (ou d'ordre 0) dont le retard de phase est indépendant à la longueur d'onde (achromatique).

Les **figures 2** et **3** illustrent deux autres configurations en transmission du dispositif de caractérisation selon l'invention.

Le dispositif PT2 permet de réaliser une mesure ultra-sensible de l'anisotropie de type linéaire d'un milieu M. Il peut s'agir d'une mesure d'anisotropie linéaire de phase (par exemple la retardance linéaire et son azimut) ou d'amplitude (par exemple la diattenuation linéaire et son azimuth).

Le dispositif PT3 permet de réaliser une mesure ultra-sensible de l'anisotropie de type elliptique d'un milieu M. Il peut s'agir d'une mesure d'anisotropie elliptique de phase (par exemple la retardance circulaire, la retardance linéaire et son azimut), ou d'amplitude (par exemple la diattenuation circulaire, la retardance linéaire et son azimut).

À la différence du dispositif PT1, l'adaptateur de phase AP2 du dispositif PT2 se compose d'une lame quart-d'onde achromatique LQ2+ et le compensateur de phase CP2 se compose d'une lame quart-d'onde achromatique LQ2- orientée pour induire un retard de phase d'ordre inverse à celui de la lame LQ2+. Plus précisément, la lame LQ2+ est conformée de façon à présenter un axe neutre (axe rapide ou lent) orienté d'un angle égal à 45 degrés par rapport à l'axe de référence. La lame LQ2- est conformée de façon à présenter un axe neutre (axe rapide ou lent) orienté d'un angle égal à -45 degrés par rapport à l'axe de référence. Ainsi, sans milieu M, l'association des lames LQ2+ et LQ2- se comporte comme une lame onde qui est neutre du point de vue du déphasage.

L'anisotropie linéaire (figure 2) est décrite par deux paramètres qui sont la retardance linéaire $R_L$ et son azimut $\theta_R$ (pour une anisotropie de phase) ou la diattenuation linéaire $D_L$ et l'azimut $\theta_D$ (pour une anisotropie d'amplitude).

L'adaptateur de phase AP2 et le compensateur de phase CP2 présents dans le dispositif PT2 permettent de discriminer la retardance linéaire (ou la diattenuation linéaire) de l'azimut. L'adaptateur AP2 et le compensateur CP2 sont configurés pour modifier respectivement les états de polarisation de la lumière avant et après le milieu M, de sorte que l'amplitude de la porteuse à la fréquence f1 est seulement dépendante de la retardance linéaire $R_L$ (ou de la diattenuation linéaire $D_L$) sous la forme du produit mathématique $I_M \times \alpha \times R_L/2$ (ou $I_M \times \alpha \times D_L/2$), et que la phase de la porteuse est seulement dépendante de l'azimut $\theta_R$ (ou $\theta_D$). L'amplitude de la première porteuse de fréquence f0 reste inchangée par rapport au dispositif PT1. Il est à noter que les lames LQ2+ et LQ2- étant achromatiques, elles ne génèrent pas de modulation supplémentaire à ceux induits par le modulateur linéariseur ML.

À la différence du dispositif PT1, l'adaptateur de phase AP3 du dispositif PT3 se compose d'une lame à retard de phase chromatique LP3+ ayant son axe neutre (axe rapide ou lent) orienté d'un angle égal à 45 degrés par rapport à l'axe de référence et une lame quart-d'onde achromatique LQ3+ ayant son axe neutre (axe rapide ou lent) orienté d'un angle égal à 0 degré par rapport à l'axe de référence. Et le compensateur de phase CP3 se compose d'une lame quart-d'onde achromatique LQ3- ayant son axe neutre (axe rapide ou lent) orienté d'un angle égal à 90 degrés par rapport à l'axe de référence et une lame à retard de phase chromatique LP3- ayant son axe neutre (axe rapide ou lent) orienté d'un angle égal à -45 degrés par rapport à l'axe de référence. Les lames LP3- et LQ3- sont ainsi orientées pour induire un retard de phase d'ordre inverse à celui respectivement des lames LP3+ et LQ3+. À titre d'exemple, les lames à retard de phase LP1, LP2, LP3+ et LP3- sont constituées d'un cristal biréfringent à base de YVO4.

L'anisotropie elliptique (figure 3) est décrite par trois paramètres qui sont la retardance circulaire $\theta$, la retardance linéaire $R_L$ et son azimut $\theta_R$ (pour une anisotropie de phase) ou la diattenuation circulaire $D_C$, la diattenuation linéaire $D_L$ et son azimut $\theta_D$ (pour une anisotropie d'amplitude). Puisque les adaptateurs AP1 et AP2, et les compensateurs CP1 et CP2 ne génèrent pas plus de modulations que le modulateur linéariseur ML, la porteuse à la fréquence f1 n'est pas suffisante pour mesurer les trois paramètres de l'anisotropie elliptique. En effet, on peut mesurer l'amplitude ou la phase d'une porteuse, soit deux mesures indépendants alors qu'il faudrait trois mesures indépendantes pour qualifier totalement l'anisotropie elliptique. En revanche, l'utilisation des lames de phase chromatiques LP3+ et LP3- ajoutent au moins une autre porteuse de fréquence différente à celles générées par le modulateur linéariseur ML afin de mesurer indépendamment la retardance circulaire $\theta$ (ou la diattenuation circulaire $D_C$) grâce à l'amplitude de la nouvelle porteuse. D'autre part, les lames quart-d'onde achromatiques LQ3+ et LQ3- permettent de séparer la retardance linéaire $R_L$ et son azimut $\theta_R$ (ou la diattenuation linéaire $D_L$ et son azimut $\theta_D$) en fonction de l'amplitude et la phase d'une autre porteuse.

L'épaisseur des lames LP3+ et LP3- doivent être choisies en fonction de la largeur de bande spectrale de la source S, de l'échantillonnage de la carte d'acquisition du détecteur, mais également en fonction des épaisseurs des lames LP1 et LP2 présentes dans le modulateur linéariseur ML. En effet, il convient de s'assurer que chaque paramètre d'anisotropie à caractériser est assigné à une porteuse différente, afin de permettre une mesure indépendante des trois paramètres de l'anisotropie elliptique.

L'ajout de l'adaptateur de phase AP3 et de son compensateur CP3 dans le dispositif PT3 permet de moduler le signal lumineux en ajoutant une troisième porteuse de fréquence de modulation différente aux première et deuxième porteuses. Le courant photoélectrique résultant délivré par le détecteur D est la somme de plusieurs contributions, à savoir : une modulation à la fréquence f0 dont l'amplitude est égale au produit $I_M \times \alpha^2$ (pour un facteur de linéarisation $\alpha$ inférieur à 10 degrés), une modulation à une deuxième fréquence f1 dont l'amplitude est égale au produit $I_M \times \alpha \times \theta$ (ou $I_M \times \alpha \times D_C/4$), et une modulation à une troisième fréquence f2 dont l'amplitude est seulement dépendante de la retardance linéaire $R_L$ (ou diattenuation linéaire $D_L$) sous la forme du produit $I_M \times \alpha \times R_L/2$ (ou $I_M \times \alpha \times D_L/4$), et la phase dépendante de l'azimut $\theta_R$ (ou azimut $\theta_D$).

La fréquence f0 de la première porteuse dépend du déphasage de la lame LP1, c'est-à-dire de son épaisseur et sa biréfringence. La fréquence f1 de la deuxième porteuse dépend des retards de phase des lames LP1, LP2. La fréquence f2 de la troisième porteuse dépend des retards de phase des lames LP1, LP2, LP3+ et LP3-. Par exemple, pour quatre lames LP1, LP2, LP3+ et LP3- fabriquées avec le même matériau et d'épaisseur respectivement égale à e1, e2, e3 (avec e3 = |e2-e1|/2) et e4 (avec e4 = |e2-e1|/2), alors les première et deuxième fréquences sont définies de la façon suivante : f1 = (1 + e2/e1) x f0 et f2 = (3 +e2/e1) x f0/2.

Typiquement, la lame LP1 en YVO4 présente une épaisseur e1 égale à 2,0 mm, la lame LP2 en YVO4 une épaisseur e2 égale à 0,4 mm, et les lames LP3+ et LP3- en YVO4 une épaisseur e3 égale à 0,8 mm. Les valeurs d'épaisseur choisies pour chacune de ces lames sont fonction de la largeur de bande spectrale de la source S et du nombre d'intervalles temporels mis en œuvre par le détecteur (pour le ré-échantillonnage du signal électrique). Pour un balayage en longueur de la source laser sur 100 nm en 10 μs, les fréquences f0, f1 et f2 sont égales respectivement à 1,8 MHz, 2,16 MHz et 2,88MHz.

La **figure 4** présente une première configuration en réflexion d'un dispositif de caractérisation PR1 selon un mode de réalisation particulier de l'invention.

Comme pour le dispositif PT3, le dispositif de caractérisation PR1 est conçu pour réaliser une mesure ultra-sensible de l'anisotropie de type elliptique d'un milieu d'étude M. Il peut s'agir d'une mesure d'anisotropie elliptique de phase ou d'amplitude.

Contrairement aux configurations en transmission décrites jusqu'ici, l'adaptateur de phase et le compensateur de phase ne forment qu'un seul et même élément mono-bloc AP4, lequel est disposé, sur un même axe optique, entre un cube séparateur de faisceau CS d'une part et un élément optiquement réfléchissant MO (un miroir optique typiquement) d'autre part. Le cube séparateur CS, disposé entre le modulateur ML et l'élément mono-bloc AP4, est arrangé pour transmettre la lumière incidente provenant du modulateur ML et pour réfléchir la lumière incidente provenant de l'élément mono-bloc AP4 en direction du détecteur D. Le miroir optique MO est arrangé pour réfléchir la lumière restituée par le milieu M vers le détecteur de lumière D via le cube séparateur de faisceau CS.

L'élément mono-bloc comprend un jeu de deux lames : la première lame est une lame à retard de phase LP4 (par exemple identique à la lame LP3+) et la deuxième lame est une lame quart-d'onde achromatique (par exemple identique à LQ3+). L'élément mono-bloc joue un rôle différent selon le sens d'incidence du faisceau lumineux arrivant sur celui-ci : le rôle d'adaptateur de phase lorsque la lumière incidente correspond à la lumière issue du séparateur de faisceau CS et le rôle de compensateur de phase lorsque la lumière incidente correspond à la lumière réfléchie provenant du miroir optique MO. Le principe de fonctionnement de l'adaptateur et du compensateur de phase est identique à celui décrit plus haut (en relation avec la figure 3).

La **figure 5** présente une deuxième configuration en réflexion d'un dispositif de caractérisation PR2 selon un mode de réalisation particulier de l'invention.

Comme pour le dispositif PT1, le dispositif de caractérisation PR2 est conçu pour réaliser une mesure ultra-sensible de l'anisotropie de type circulaire d'un milieu d'étude M. Il peut s'agir d'une mesure d'anisotropie circulaire de phase ou d'amplitude.

A la différence de la configuration du dispositif PR1, l'élément monobloc AP5 assurant les rôles d'adaptateur et de compensateur de phase selon l'invention est constitué d'une seule lame d'onde achromatique LQ5 (par exemple identique à lame LQ1+). A titre d'alternative, l'élément monobloc AP5 est constitué d'aucune lame (le milieu M est alors compris directement entre le miroir optique MO et le cube séparateur CS), rendant ainsi le dispositif plus compact.

Selon un autre mode de réalisation particulier de l'invention, il est proposé un système d'imagerie comprenant un dispositif de caractérisation polarimétrique, tel que celui décrit ci-dessus dans l'un de ses modes de réalisation (en relation avec les figures 1 à 5), et des moyens de génération d'une image polarimétrique du milieu.

Des données de mesures de caractérisation polarimétrique du milieu M sont obtenues par l'unité de traitement du dispositif, en fonction des signaux électriques délivrés par le détecteur D. L'unité de traitement est par ailleurs raccordée électriquement aux moyens de génération de manière à pouvoir traiter les données de mesure de caractérisation polarimétrique obtenues par le dispositif et les convertir en une image représentative de l'anisotropie mesurée. Une telle image permet de délivrer à l'utilisateur du système des informations visuelles pertinente illustrant les caractéristiques anisotropiques du milieu M.

Le système d'imagerie selon l'invention peut être configuré pour permettre une imagerie en champ large ou une imagerie à balayage laser. Pour une configuration basée sur un spectromètre par exemple, le système intégrera une source lumineuse à large bande spectrale et, côté détecteur, un spectromètre (imagerie en balayage laser) ou une caméra hyper-spectrale (imagerie en champ large). Il est à noter que l'intensité électrique délivrée par le détecteur est dans ce cas définie dans des intervalles de fréquence optique. Pour une configuration basée sur une source laser à balayage en longueur d'onde, le système intégrera, côté source, une source laser accordable en longueur d'onde délivrant séquentiellement différentes longueurs d'onde sur une large bande spectrale et, côté détecteur, un photodétecteur (imagerie en balayage laser) ou une caméra CCD (pour « Charge Coupled Device ») (imagerie en champ large). L'intensité électrique délivrée par le détecteur est dans ce cas définie dans des intervalles de temps équivalents à des intervalles de fréquence optique.

On présente ci-après les relations mathématiques relatives au calcul d'angle d'inclinaison $\alpha$ et à la mesure d'anisotropie du milieu, pour une source laser à balayage en longueur d'onde d'une part, et pour une source laser à large bande spectrale d'autre part.

• Calcul de l'angle d'inclinaison $\alpha$ de la lame de phase LP1 dans le modulateur linéaire ML

\* Pour une source à balayage en longueur d'onde

Le détecteur est par exemple une photodiode de type PIN ou APD. L'angle d'inclinaison $\alpha$ est alors défini par l'équation suivante :

$$\alpha = \frac{1}{2}\sqrt{\frac{P_{sat}}{P_0}}$$

avec :

$P_{sat}$ la puissance optique de saturation de la photodiode ;
$P_0$ à la puissance optique au niveau du milieu anisotrope.
Par exemple, pour des valeurs de puissance optique $P_{sat} = 5\,\mu W$ et $P_0 = 20\,mW$, l'angle d'inclinaison $\alpha$ que doit prendre la lame de phase LP1 est égal à $7,9 \times 10^{-3}$ rad, soit $\alpha = 0,42$ degrés.

\* Pour une source large bande

Le détecteur est par exemple un spectromètre doté d'une caméra d'imagerie CCD. L'angle d'inclinaison $\alpha$ est alors défini par l'équation suivante :

$$\alpha = \frac{1}{2}\sqrt{\frac{P_{sat}}{P_0 / N_s}}$$

avec :

$P_{sat}$ la puissance optique de saturation d'un pixel de la caméra CCD ;
$P_0$ la puissance optique au niveau du milieu anisotrope ;
$N_s$ le nombre de pixels dont est dotée la caméra CCD.

Par exemple, pour des valeurs de puissance optique $P_{sat} = 0,5\,nW$, $P_0 = 20\,mW$ et un nombre de pixels $N_s = 2048$, l'angle d'inclinaison $\alpha$ que doit prendre la lame de phase LP1 est égal 3,5x10$^{-3}$ rad, soit $\alpha$ = 0,20 degrés.

• Calcul d'anisotropie du milieu

La résolution de la mesure d'anisotropie est la plus petite valeur d'anisotropie mesurable par le détecteur. Elle est conditionnée essentiellement par le bruit perturbateur au niveau du détecteur. On note par la suite « $m$ » la mesure d'anisotropie du milieu :

- Pour un milieu présentant une anisotropie circulaire de phase, $m = \theta$ avec $\theta$ l'angle de rotation optique.
- Pour un milieu présentant une anisotropie circulaire d'amplitude, $m = D_C/4$ avec : $D_C = (\mu_{RCP} - \mu_{LCP}) \times L$, où $L$ est l'épaisseur du milieu, $\mu_{RCP}$ et $\mu_{LCP}$ sont les coefficients d'intensité d'absorption ou de diffusion des états de polarisation circulaire droit et gauche respectivement.
- Pour un milieu présentant une anisotropie linéaire de phase, $m = R_L/2$ avec : $R_L = 2 \times \pi \times (n_{slow} - n_{fast}) \times L \times v_0 / c$ où $L$ l'épaisseur du milieu, $n_{slow}$ et $n_{fast}$ sont les indices de réfractions des axes neutres, $v_0$ est la fréquence optique et $c$ la vitesse de la lumière.
- Pour un milieu présentant une anisotropie linéaire d'amplitude, $m = D_L/4$ avec : $D_L = (\mu_2 - \mu_1) \times L$, où $\mu_1$ et $\mu_2$ sont les coefficients d'intensité d'absorption ou de diffusion de deux états de polarisation rectilignes et orthogonaux.

\* Pour une source à balayage en longueur d'onde

Le détecteur est par exemple une photodiode de type PIN ou APD. L'écart de résolution de la mesure d'anisotropie est alors défini par l'équation suivante :

$$\Delta m = \sqrt{\frac{T\left(NEP^2 + 2\frac{h v_0}{\eta}\sqrt{6}\, P_0\, \alpha^2\right) B}{2 N_s P_0^2\, \alpha^2}}$$

avec :

1/$T$ la fréquence de mesure du détecteur ;
$\alpha$ l'angle d'inclinaison de la lame de phase LP1 dans le modulateur linéaire ML ;
$NEP$ la puissance équivalente de bruit (« *Noise Equivalent Power* ») associé au détecteur ;
$h$ la constante de Planck ;
$v_0$ la fréquence optique ;
$\eta$ l'efficacité quantique du détecteur ;
$B$ la bande passante du détecteur ; et
$N_s$ le nombre de valeurs associé à l'échantillonnage du signal électrique délivré par le détecteur servant à convertir la puissance lumineuse en courant électrique.

Par exemple, pour une mesure à la fréquence 1/$T$ = 100 kHz, une puissance optique $P_0$ = 20 mW, un

angle d'inclinaison $\alpha$ = 0,42 degrés, une puissance équivalente de bruit de $NEP$ = 0,5 pW/Hz$^{1/2}$, une fréquence optique $v_0$ = 3x10$^{14}$ Hz (correspondant à une longueur d'onde de 1 $\mu$m), une efficacité quantique $\eta$ = 40%, une bande passante $B$ = 150 MHz (associé à l'échantillonnage temporel du signal électrique), un nombre $N_s$ = 1440 et une constante $h$ = 6.63 10$^{-34}$ J.s, l'écart de résolution de mesure d'anisotropie $\Delta m$ est égal à 8,3x10$^{-9}$ Hz$^{-1/2}$.

Partant de cette valeur $\Delta m$, on obtient les valeurs d'anisotropie suivantes :

$$\Delta\theta = 5\text{x}10^{-7}\ \text{deg.Hz}^{-1/2}\ ;$$

$$\Delta R_L = 1\text{x}10^{-6}\ \text{deg.Hz}^{-1/2}\ ;$$

$$\Delta D_L = 35\text{x}10^{-9}\ \text{Hz}^{-1/2}\ ;$$

$$\Delta D_C = 35\text{x}10^{-9}\ \text{Hz}^{-1/2}.$$

\* Pour une source large bande

Le détecteur est par exemple un spectromètre doté d'une caméra d'imagerie CCD. L'écart de résolution de la mesure d'anisotropie est alors défini par l'équation suivante :

$$\Delta m = \sqrt{\frac{T\left(NEP^2 + 2\frac{h v}{\eta}\sqrt{6}\, (P_0/N_s)\, \alpha^2\right) B}{2\left(P_0/N_s\right)^2\, \alpha^2}}$$

avec :

1/$T$ la fréquence de mesure du détecteur ;
$\alpha$ l'angle d'inclinaison de la lame de phase LP1 dans le modulateur linéaire ML ;
$NEP$ la puissance équivalente de bruit (« *Noise Equivalent Power* ») associé au détecteur ;
$h$ la constante de Planck ;
$v_0$ la fréquence optique ;
$\eta$ l'efficacité quantique du détecteur ;
$B$ la bande passante du détecteur ; et
$N_s$ le nombre de pixels dont est dotée la caméra CCD.

Par exemple, pour une mesure à la fréquence 1/T = 100 kHz, une puissance optique $P_0$ = 20 mW, un angle d'inclinaison $\alpha$ = 0, 20 degrés, une puissance équivalente de bruit de $NEP$ = 1x10$^{-3}$ pW/Hz$^{1/2}$, une fréquence optique $v_0$ = 3x10$^{14}$ Hz (correspondant à une longueur d'onde de 1 $\mu$m), une efficacité quantique $\eta$ = 40%, une bande passante $B$ = 150 MHz (associé au temps d'intégration d'un pixel), un nombre de pixels $N_s$ = 2048 et une constante h = 6.63 10$^{-34}$ J.s, l'écart de résolution de mesure d'anisotropie $\Delta m$ est égal à $7,8 \times 10^{-9}$ $Hz^{-1/2}$.

Partant de cette valeur $\Delta m$, on obtient les valeurs d'anisotropie suivantes :

$$\Delta\theta = 4,5 \times 10^{-7} \text{ deg.Hz}^{-1/2} ;$$

$$\Delta R_L = 0,9 \times 10^{-6} \text{ deg.Hz}^{-1/2} ;$$

$$\Delta D_L = 31 \times 10^{-9} \text{ Hz}^{-1/2} ;$$

$$\Delta D_C = 31 \times 10^{-9} \text{ Hz}^{-1/2}.$$

Il s'agit là bien évidemment d'un exemple purement illustratif et non limitatif de l'invention qui est définie par les revendications annexées.

A noter que l'intégration d'une unité (ou module) de calcul, reliée d'une part à la source de lumière et d'autre part au détecteur, et configurée pour déterminer une valeur de l'angle d'inclinaison $\alpha$ de la lame de phase en fonction notamment des paramètres du détecteur (tel que le seuil de saturation ou la puissance optique de saturation) de façon à obtenir une sensibilité augmentée dudit dispositif à la mesure d'anisotropie, pourrait être envisagée.

## Revendications

1. Dispositif de caractérisation polarimétrique de l'anisotropie d'un milieu (M), comprenant :

   - une source de lumière (S) émettant une lumière multi-longueur d'onde,
   - des moyens de codage spectral en polarisation (MCP1) disposés entre la source de lumière (S) et le milieu (M), configurés pour coder spectralement en polarisation la lumière émise, lesdits moyens de codage comprenant un premier polariseur (P1) définissant un premier axe de polarisation, dit axe de référence, et un modulateur spectral (ML) disposé en sortie du premier polariseur (P1), ledit modulateur spectral (ML) comprenant des première et deuxième lames à retard de phase chromatiques (LP1, LP2) disposées successivement et conformées de façon à produire respectivement des premier et deuxième retards de phase distincts,
   - un détecteur de lumière (D) définissant un seuil de saturation d'intensité prédéterminé,
   - des moyens de décodage spectral en polarisation (MDP1) disposés entre le milieu (M) et le détecteur de lumière (D) et configurés pour décoder spectralement en polarisation une lumière restituée par le milieu, lesdits moyens de décodage comprenant un deuxième polariseur (P2) définissant un deuxième axe de polarisation orienté perpendiculairement à l'axe de référence,

   le dispositif étant **caractérisé en ce que** la première lame à retard de phase présente un premier axe neutre définissant avec l'axe de référence un angle d'inclinaison dont la valeur est fonction du seuil de saturation du détecteur de lumière (D) pour obtenir une sensibilité augmentée dudit dispositif.

2. Dispositif selon la revendication 1, dans lequel lesdites première et deuxième lames à retard de phase (LP1, LP2) sont constituées d'un même matériau cristallin biréfringent et ont une épaisseur différente.

3. Dispositif selon la revendication 1, dans lequel lesdites première et deuxième lames à retard de phase (LP1, LP2) sont constituées d'un matériau cristallin de biréfringence différente.

4. Dispositif selon la revendication 1, dans lequel la deuxième lame à retard de phase a un deuxième axe neutre orienté de manière à être confondu avec l'axe de référence.

5. Dispositif selon l'une quelconque des revendications 1 et 2, dans lequel la source de lumière (S) présente une largeur de bande spectrale prédéterminée, les première et deuxième lames à retard de phase ont chacune une épaisseur qui dépend de ladite largeur de bande spectrale prédéterminée.

6. Dispositif selon l'une quelconque des revendications 1 à 5, dans lequel :

   - les moyens de codage (MPC1) comprennent un adaptateur de phase passif (AP1, AP2, AP3) disposé en sortie du modulateur spectral (ML) et conformé de façon à induire un troisième retard de phase ; et
   - les moyens décodage (MDP1) comprennent un compensateur de phase passif (CP1, CP2, CP3) disposé en entrée du deuxième polariseur (P2) et conformé de façon à appliquer un quatrième retard de phase qui est un retard de phase inverse au troisième retard de phase.

7. Dispositif selon la revendication 6, dans lequel :

   - l'adaptateur de phase (AP1) est uniquement constitué d'une première lame d'onde achromatique (LQ1+) ou est exempt de lame optique ;
   - le compensateur de phase (CP1) est uniquement constituée d'une deuxième lame d'onde achromatique (LQ1-) ou est exempt de lame optique.

**8.** Dispositif selon la revendication 6, dans lequel :

- l'adaptateur de phase (AP2) est uniquement constitué d'une première lame quart-d'onde achromatique (LQ2+), ayant un axe neutre orienté d'un angle sensiblement égal à 45 degrés par rapport à l'axe de référence ;
- le compensateur de phase (CP2) est uniquement constitué d'une deuxième lame quart-d'onde achromatique (LQ2-), ayant un axe neutre orienté d'un angle sensiblement égal à -45 degrés par rapport à l'axe de référence.

**9.** Dispositif selon la revendication 6 dans lequel :

- l'adaptateur de phase (AP3) est uniquement constitué de :

  • une troisième lame à retard de phase chromatique (LP3+) ayant un troisième axe neutre orienté d'un angle sensiblement égal à 45 degrés par rapport à l'axe de référence,
  • une première lame quart-d'onde achromatique (LQ3+), ayant un premier axe neutre orienté d'un angle sensiblement égal à 0 degré par rapport à l'axe de référence, et disposée en sortie de ladite troisième lame;

- le compensateur de phase (CP3) est uniquement constitué de :

  • une deuxième lame quart-d'onde achromatique (LQ3-), ayant un deuxième axe neutre orienté d'un angle sensiblement égal à 90 degrés par rapport à l'axe de référence ; et
  • une quatrième lame à retard de phase chromatique (LP3-) ayant un quatrième axe neutre orienté d'un angle sensiblement égal à -45 degrés par rapport à l'axe de référence, et disposée en sortie de ladite deuxième lame.

**10.** Dispositif selon la revendication 6, dans lequel l'adaptateur de phase (AP1) et le compensateur de phase (CP1) forment deux blocs distincts disposés de part et d'autre du milieu (M) de façon à former une configuration polarimétrique en transmission.

**11.** Dispositif selon la revendication 6, dans lequel l'adaptateur de phase et le compensateur de phase forment un élément mono-bloc (AP4) disposé entre un cube séparateur de faisceau (CS) et un élément optiquement réfléchissant (MO), ledit élément réfléchissant (MO) étant agencé pour réfléchir la lumière restituée par le milieu (M) vers le détecteur de lumière (D) via le cube séparateur de faisceau (CS), de façon à former une configuration polarimétrique en réflexion, ledit élément mono-bloc jouant le rôle d'adaptateur de phase pour une lumière incidente issue du séparateur de faisceau (CS) et le rôle de compensateur pour une lumière incidente correspondant à la lumière réfléchie par l'élément réfléchissant (MO).

**12.** Système d'imagerie **caractérisé en ce qu'**il comprend :

- un dispositif de caractérisation polarimétrique selon l'une quelconque des revendications 1 à 11, ledit dispositif comprenant des moyens d'obtention de données de mesure de caractérisation polarimétrique du milieu ;
- des moyens de génération d'une image polarimétrique du milieu prenant en compte lesdites données de mesure de caractérisation polarimétrique.

**Patentansprüche**

**1.** Vorrichtung zur polarimetrischen Charakterisierung der Anisotropie eines Mediums (M), beinhaltend:

- eine Lichtquelle (S), die Mehrwellenlängenlicht emittiert;
- spektrale Polarisationscodierungsmittel (MCP1), die zwischen der Lichtquelle (S) und dem Medium (M) angeordnet sind und dazu konfiguriert sind, das emittierte Licht spektral polarisiert zu codieren, wobei die Codierungsmittel einen ersten Polarisator (P1), der eine erste Polarisationsachse, als Referenzachse bezeichnet, definiert, und einen spektralen Modulator (ML), der am Ausgang des ersten Polarisators (P1) angeordnet ist, beinhalten, wobei der spektrale Modulator (ML) eine erste und eine zweite chromatische Phasenverzögerungsplatte (LP1, LP2) beinhaltet, die aufeinanderfolgend angeordnet und so ausgebildet sind, dass sie jeweils eine erste und eine zweite Phasenverzögerung, die sich unterscheiden, erzeugen,
- einen Lichtdetektor (D), der eine vorbestimmte Intensitätssättigungsschwelle definiert,
- spektrale Polarisationsdecodierungsmittel (MDP1), die zwischen dem Medium (M) und dem Lichtdetektor (D) angeordnet sind und dazu konfiguriert sind, durch das Medium zurückgegebenes Licht spektral polarisiert zu decodieren, wobei die Decodierungsmittel einen zweiten Polarisator (P2) beinhalten, der eine zweite Polarisationsachse definiert, die senkrecht zu der Referenzachse ausgerichtet ist,

wobei die Vorrichtung **dadurch gekennzeichnet**

**ist, dass** die erste Phasenverzögerungsplatte eine erste neutrale Achse aufweist, die mit der Referenzachse einen Neigungswinkel definiert, dessen Wert von der Sättigungsschwelle des Lichtdetektors (D) abhängt, um eine erhöhte Empfindlichkeit der Vorrichtung zu erhalten.

2. Vorrichtung nach Anspruch 1, wobei die erste und die zweite Phasenverzögerungsplatte (LP1, LP2) aus einem gleichen doppelbrechenden kristallinen Material bestehen und eine unterschiedliche Dicke aufweisen.

3. Vorrichtung nach Anspruch 1, wobei die erste und die zweite Phasenverzögerungsplatte (LP1, LP2) aus einem kristallinen Material mit unterschiedlicher Doppelbrechung bestehen.

4. Vorrichtung nach Anspruch 1, wobei die zweite Phasenverzögerungsplatte eine zweite neutrale Achse aufweist, die so ausgerichtet ist, dass sie mit der Referenzachse zusammenfällt.

5. Vorrichtung nach einem der Ansprüche 1 und 2, wobei die Lichtquelle (S) eine vorbestimmte spektrale Bandbreite aufweist, wobei die erste und die zweite Phasenverzögerungsplatte jeweils eine Dicke aufweisen, die von der vorbestimmten spektralen Bandbreite abhängt.

6. Vorrichtung nach einem der Ansprüche 1 bis 5, wobei:

   - die Codierungsmittel (MPC1) einen passiven Phasenadapter (AP1, AP2, AP3) beinhalten, der am Ausgang des spektralen Modulators (ML) angeordnet ist und dazu ausgebildet ist, eine dritte Phasenverzögerung zu induzieren; und
   - die Decodierungsmittel (MDP1) einen passiven Phasenkompensator (CP1, CP2, CP3) beinhalten, der am Eingang des zweiten Polarisators (P2) angeordnet ist und dazu ausgebildet ist, eine vierte Phasenverzögerung anzuwenden, die eine zu der dritten Phasenverzögerung umgekehrte Phasenverzögerung ist.

7. Vorrichtung nach Anspruch 6, wobei:

   - der Phasenadapter (AP1) ausschließlich aus einer ersten achromatischen Wellenplatte (LQ1+) besteht oder keine optische Platte besitzt;
   - der Phasenkompensator (CP1) ausschließlich aus einer zweiten achromatischen Wellenplatte (LQ1-) besteht oder keine optische Platte besitzt.

8. Vorrichtung nach Anspruch 6, wobei:

   - der Phasenadapter (AP2) ausschließlich aus einer ersten achromatischen Viertelwellenplatte (LQ2+) besteht, die eine neutrale Achse aufweist, die in einem Winkel von im Wesentlichen 45 Grad in Bezug auf die Referenzachse ausgerichtet ist;
   - der Phasenkompensator (CP2) ausschließlich aus einer zweiten achromatischen Viertelwellenplatte (LQ2-) besteht, die eine neutrale Achse aufweist, die in einem Winkel von im Wesentlichen -45 Grad in Bezug auf die Referenzachse ausgerichtet ist.

9. Vorrichtung nach Anspruch 6, wobei:

   - der Phasenadapter (AP3) ausschließlich aus Folgendem besteht:

      • einer dritten chromatischen Phasenverzögerungsplatte (LP3+), die eine dritte neutrale Achse aufweist, die in einem Winkel von im Wesentlichen 45 Grad in Bezug auf die Referenzachse ausgerichtet ist,
      • einer ersten achromatischen Viertelwellenplatte (LQ3+), die eine erste neutrale Achse aufweist, die in einem Winkel von im Wesentlichen 0 Grad in Bezug auf die Referenzachse ausgerichtet ist, und am Ausgang der dritten Platte angeordnet ist;

   - der Phasenkompensator (CP3) ausschließlich aus Folgendem besteht:

      • einer zweiten achromatischen Viertelwellenplatte (LQ3-), die eine zweite neutrale Achse aufweist, die in einem Winkel von im Wesentlichen 90 Grad in Bezug auf die Referenzachse ausgerichtet ist; und
      • einer vierten chromatischen Phasenverzögerungsplatte (LP3-), die eine vierte neutrale Achse aufweist, die in einem Winkel von im Wesentlichen -45 Grad in Bezug auf die Referenzachse ausgerichtet ist, und am Ausgang der zweiten Platte angeordnet ist.

10. Vorrichtung nach Anspruch 6, wobei der Phasenadapter (AP1) und der Phasenkompensator (CP1) zwei getrennte Blöcke bilden, die auf beiden Seiten des Mediums (M) angeordnet sind, um eine polarimetrische Transmissionskonfiguration zu bilden.

11. Vorrichtung nach Anspruch 6, wobei der Phasenadapter und der Phasenkompensator ein Einzelblockelement (AP4) bilden, das zwischen einem Strahlteilerwürfel (CS) und einem optisch reflektierenden Element (MO) angeordnet ist, wobei das reflektierende Element (MO) dazu eingerichtet ist, das durch das Medium (M) zurückgegebene Licht über den Strahlteilerwürfel (CS) zu dem Lichtdetektor (D) hin zu reflektieren, um eine polarimetrische Reflexionskonfiguration zu bilden, wobei das Einzelblockelement für aus dem Strahlteiler (CS) kommendes einfallendes Licht die Rolle eines Phasenadapters und für einfallendes Licht, das dem durch das reflektierende Element (MO) reflektierten Licht entspricht, die Rolle eines Kompensators übernimmt.

12. Bildabbildungssystem, **dadurch gekennzeichnet, dass** es Folgendes beinhaltet:

- eine Vorrichtung zur polarimetrischen Charakterisierung nach einem der Ansprüche 1 bis 11, wobei die Vorrichtung Mittel zum Erhalten von Messdaten zur polarimetrischen Charakterisierung des Mediums beinhaltet;
- Mittel zum Erzeugen eines polarimetrischen Bildes des Mediums unter Berücksichtigung der Messdaten zur polarimetrischen Charakterisierung.

**Claims**

1. A device for polarimetrically characterising the anisotropy of a medium (M), comprising:

- a light source (S) emitting multi-wavelength light,
- spectral polarisation coding means (MCP1) arranged between the light source (S) and the medium (M), configured to spectrally polarisation code the emitted light, said coding means comprising a first polariser (P1) defining a first polarisation axis, called the reference axis and a spectral modulator (ML) arranged as an output of the first polariser (P1), said spectral modulator (ML) comprising first and second chromatic phase delay plates (LP1, LP2) arranged successively and shaped so as to produce first and second distinct phase delays respectively,
- a light detector (D) defining a predetermined intensity saturation threshold,
- spectral polarisation decoding means (MDP1) arranged between the medium (M) and the light detector (D) and configured to spectrally polarisation decode light returned by the medium, said decoding means comprising a second polariser (P2) defining a second polarisation axis oriented perpendicular to the reference axis,

the device being **characterised in that** the first phase delay plate has a first neutral axis defining with the reference axis a tilt angle whose value is a function of the saturation threshold of the light detector (D) to obtain an increased sensitivity of said device.

2. The device according to claim 1, wherein said first and second phase delay plates (LP1, LP2) consist of a same birefringent crystalline material and have a different thickness.

3. The device according to claim 1, wherein said first and second phase delay plates (LP1, LP2) consist of a crystalline material of different birefringence.

4. The device according to claim 1, wherein the second phase delay plate has a second neutral axis oriented so as to be the same as the reference axis.

5. The device according to any of claims 1 and 2, wherein the light source (S) has a predetermined spectral bandwidth, the first and second phase delay plates each have a thickness which depends on said predetermined spectral bandwidth.

6. The device according to any of claims 1 to 5, wherein:

- the coding means (MPC1) comprise a passive phase adapter (AP1) arranged as an output of the spectral modulator (ML) and shaped so as to induce a third phase delay; and
- the decoding means (MDP1) comprise a passive phase compensator (CP1) arranged as an input of the second polariser (P2) and shaped so as to apply a fourth phase delay which is a reverse phase delay to the third phase delay.

7. The device according to claim 6, wherein:

- the phase adaptor (AP1) consists only of a first achromatic waveplate (LQ1+) or is free of an optical plate;
- the phase compensator (CP1) consists only of a second achromatic waveplate (LQ1-) or is free of an optical plate.

8. The device according to claim 6, wherein:

- the phase adapter (AP2) consists only of a first achromatic quarter-wave plate (LQ2+), having a neutral axis oriented at an angle substantially equal to 45 degrees with respect to the reference axis;
- the phase compensator (CP3) consists only of a second achromatic quarter-wave plate (LQ2-), having a neutral axis oriented at an angle substantially equal to -45 degrees with respect to the reference axis.

9. The device according to claim 6, wherein:

- the phase adapter (AP3) consists only of:

  • a third chromatic phase delay plate (LP3+) having a third neutral axis oriented at an angle substantially equal to 45 degrees with respect to the reference axis,
  • a first achromatic quarter-wave plate (LQ3+), having a first neutral axis oriented at an angle substantially equal to 0 degrees with respect to the reference axis, and arranged as an output of said third plate;

- the phase compensator (CP1) consists only of:

  • a second achromatic quarter-wave plate (LQ3-), having a second neutral axis oriented at an angle substantially equal to 90 degrees with respect to the reference axis; and
  • a fourth chromatic phase delay plate (LP3-) having a fourth neutral axis oriented at an angle substantially equal to -45 degrees with respect to the reference axis, and arranged as an output of said second plate.

10. The device according to claim 6, wherein the phase adapter (AP1) and the phase compensator (CP1) form two distinct blocks arranged on either side of the medium (M) so as to form a transmission polarimetric configuration.

11. The device according to claim 6, wherein the phase adapter and the phase compensator form a single-block element (AP4) arranged between a beam splitter cube (CS) and an optically reflective element (MO), said reflective element (MO) being arranged to reflect the light returned by the medium (M) to the light detector (D) via the beam splitter cube (CS) so as to form a reflection polarimetric configuration, said single-block element playing the role of a phase adapter for incident light coming from the beam splitter (CS) and of a compensator for incident light corresponding to the light reflected by the reflective element (MO).

12. An imaging system **characterised in that** it comprises:

  - a polarimetric characterisation device according to any of claims 1 to 11, said device comprising means for obtaining polarimetric characterisation measurement data of the medium;
  - means for generating a polarimetric image of the medium taking account of said polarimetric characterisation measurement data.

Fig. 1

Fig. 2

PT3

P1   ML   AP3        CP3   P2

source

S
MCP3   LP1   LP3+   M   MDP3   LQ3-   D
       LP2   LQ3+         LP3-

## Fig. 3

PR1   P1   ML   P2   D   AP4   M

source

S
LP1   LP2   CS   LP4   LQ4   MO

## Fig. 4

Fig. 5

Fig. 6

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7202950 B2

- WO 2017099755 A

**Littérature non-brevet citée dans la description**

- **LE GRATIET A et al.** *PROCEEDINGS OF SPIE*, 2016, vol. 9887, 988724